(19) Europäisches Patentamt
European Patent Office
Office européen des brevets

(11) EP 3 818 828 A1

(12) EUROPEAN PATENT APPLICATION

(43) Date of publication:
**12.05.2021 Bulletin 2021/19**

(51) Int Cl.:
***A01N 43/30** (2006.01)* ***A01P 3/00** (2006.01)*

(21) Application number: **20177922.0**

(22) Date of filing: **03.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.11.2019 CN 201911093376**

(71) Applicant: **Institute of Plant Protection, Gansu Academy of Agricultural Sciences**
**Lanzhou City, Gansu 100193 (CN)**

(72) Inventors:
- **HU, Guanfang**
  **Lanzhou City, Gansu 100193 (CN)**
- **WANG, Yuling**
  **Lanzhou City, Gansu 100193 (CN)**
- **LIU, Yingqian**
  **Lanzhou City, Gansu 100193 (CN)**
- **YU, Haitao**
  **Lanzhou City, Gansu 100193 (CN)**
- **NIU, Shujun**
  **Lanzhou City, Gansu 100193 (CN)**
- **LIU, Minyan**
  **Lanzhou City, Gansu 100193 (CN)**
- **LI, Yuqi**
  **Lanzhou City, Gansu 100193 (CN)**
- **YANG, Guanzhou**
  **Lanzhou City, Gansu 100193 (CN)**
- **HUI, Nana**
  **Lanzhou City, Gansu 100193 (CN)**
- **ZHAO, Feng**
  **Lanzhou City, Gansu 100193 (CN)**
- **ZHANG, Xinrui**
  **Lanzhou City, Gansu 100193 (CN)**
- **LIU, Yonggang**
  **Lanzhou City, Gansu 100193 (CN)**
- **GUO, Zhijie**
  **Lanzhou City, Gansu 100193 (CN)**

(74) Representative: **Isern Patentes y Marcas S.L.**
**Avda. Diagonal, 463 Bis, 2°**
**08036 Barcelona (ES)**

# (54) USE OF CINNAMAMIDE DERIVATIVES IN THE CONTROL OF FUNGAL DISEASES OF CROPS

(57) Disclosed is a use of cinnamamide derivatives in the control of fungal diseases of crops, the cinnamamide derivative is 3-(3',4'-methylenedioxyphenyl)-N-n-propyl acrylamide, the chemical structural formula of which is as below:

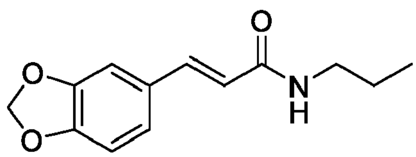

;

alternatively, 3-(3',4'-methylenedioxy phenyl)-piperidine acrylate, the chemical structural formula of which is as below:

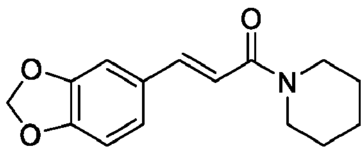

.

The cinnamamide derivatives have a broad antifungal spectrum against pathogenic fungi of crops, are safe for crops, and can be used for the control of fungal diseases of crops such as powdery mildew, damping-off, blight, early blight,

EP 3 818 828 A1

rot, downy blight, fusarium wilt, gummy stem blight, pythium rot, anthracnose, dry rot, white rot, full rot, ring spot, sheath blight, gray mold, northern leaf blight, F. verticillioide, stalk break, rice blast, late blight and the like, the field efficiencies of which are significantly superior to that of acrylamide fungicide, dimethomorph.

## Description

### TECHNICAL FIELD

The present invention relates to the technical field of pesticides, and particularly relates to a use of cinnamamide derivatives in the control of fungal diseases of crops.

### BACKGROUD

Amide compounds have been used as fungicides for decades. In the recent ten years, more than 30 kinds of amide fungicides have been developed, such as Boscalid, Fluopicolide, fluopyram, furametpyr, penthiopyrad, bixafen and so on, which are mainly used for the control of diseases such as downy mildew, blight, late blight, powdery mildew, gray mold, black spot, and scab, and most varieties have excellent control effects on Oomycetes diseases (downy mildew, late blight, blight, etc.). Dimethomorph is a derivative of cinnamamide, a morpholine fungicide, which is a highly effective systemic fungicide for the control of oomycetes diseases (downy mildew, late blight, blight, etc.), and especially suitable for the treatment of benzamide fungicide (metalaxyl) resistant diseases. Although dimethomorph has been reported to have excellent protective and therapeutic activities, the therapeutic activity is very poor actually [①Albert A. et al. Brighton: British Crop Prot. Council, 1988, 17-23; ②Liu Changling, et al. Brighton: British Crop Prot. Council, 2000, 549-556]. Flumorph is a new variety of fungicide with independent intellectual property rights developed by Shenyang Research Institute of Chemical Industry, which is mainly used for the control of Oomycetes diseases. Its therapeutic activity and the activity of inhibiting spore germination are superior to those of similar foreign products, also a kind of morpholine fungicide. Most of morpholine fungicides (tridemorph, etc.) are used for the control of powdery mildew, while the fungicidal action of dimethomorph and flumorph is to directly destroy the formation of fungal cells, causing the decomposition of cell walls, thus leading to the death of fungal cells, so they have no effects on the control of powdery mildew. Although dimethomorph and flumorph contain morpholine ring groups, it's not the morpholine ring active groups that functions, actually they are classified as acrylamide fungicides.

Piperine belongs to amide alkaloids and is abundant in plants of Piperaceae, which has a wide range of pharmacological effects. Compared with piperine, the compound 3-(3',4'-methylenedioxy phenyl)-piperidine acrylate lacks a double bond on the pentadiene chain, while the compound 3-(3',4'-methylenedioxy phenyl)-N-n-propyl acrylamide is obtained by replacing the piperidine substituent on 3-(3',4'-methylenedioxy phenyl)-piperidine acrylate with a n-propylamine substituent; therefore, these two compounds are both cinnamamide derivatives similar to piperine. [①Ribeiro T. S., et al. Bioorg. Med. Chem. Lett. 2004, 14(13): 3555-3558; ②Franklim T.M., et al. Molecules, 2013, 18(6): 6366-6382] have reported the effect of piperine and derivatives of different groups thereof on the inhibition of *Trypanoma cruzi;* [Carrara V. D. S. et al. Eur. J. Med. Chem., 2010, 45(8): 3439-3445] has reported the effect of piperine derivatives on the inhibition of *Leishmania spp.* Some of the above reports have covered the two compounds, 3-(3',4'-methylenedioxy phenyl)-N-n-propyl acrylamide and 3-(3',4'-methylenedioxy phenyl)-piperidine acrylate, while the activities of these two compounds against plant pathogenic fungi have not been reported at home and abroad.

There are many reports on the biological activities of cinnamamide derivatives at home and abroad, mainly focusing on anti-convulsion, vasodilation, anti-mutagenesis, anti-tumor, insecticide, anti-inflammatory and other aspects [① Ma Funing, et al., Journal of Huazhong Agricultural University, 2009, 30 (1): 23-26; ② Xu Changliang, et al., Chinese Medicinal Biotechnology, 2013, 8 (1): 46-52; ③ Chen Siyu, Changsha: School of Pharmacy, Central South University, 2011]. For recent years, there have been increasing reports on the antifungal activities of cinnamamide derivatives. [Peng Chunyong, et al., Organic Chemistry, 2013, 33 (2): 383-388] found by structure-activity analysis of compounds that the introduction of amide groups is helpful to improve the activities against *Escherichia coli, Staphyloccocus aureus* and *Candida albicans*; cinnamamide compounds extracted from wampee seed, clausenamide and N-methyl-cinnamamide, have great antifungal effects on fruit pathogenic fungi [① Liu Yanxia, et al., Plant Protection, 2009, 35 (5): 53-56; ② Liu Yanxia, Guangzhou: College of National Resources and Environment, South China Agricultural University, 2009]; [Li Yifang, et al., Journal of Zhongkai University of Agriculture and Technology, 2013, 26 (2): 16-21] determines the ex vivo antifungal activities of 20 kinds of cinnamamide compounds synthesized artificially with clausenamide as the lead compound against *Colletotrichum gloeosporioides,* and further analyzes the relationship between the substituents of compounds and their antifungal activities, showing that (E)-3-(3,4-dimethyl)-N-phenethyl-3-(pyridine -4) acrylamide has a good antifungal effect, while the antifungal activities of compounds with other substituents have not been improved significantly; [Li Xin, Jinan: Shandong University, 2017] has synthesized 4 series of new cinnamamide compounds based on targeted FtsZ, 102 totally, and evaluated its biological activities against *Staphyloccocus aureus* and *Bacillus subtilis;* (Stoykova B., et al. J. Mol. Struct. 2017, 1135, 144-152) has evaluated the antifungal properties of N-phenyl acryloyl amino acid amide bromide (one kind of cinnamamide compound). The use of cinnamamide derivatives in the control of fungal diseases of crops has not been reported in literatures at home and abroad.

The fungicides currently used for the control of powdery mildew of crops in production include triazoles, morpholines and methoxy acrylates. For triazole fungicides, drug resistance has developed as a result of long-term continuous use, and most varieties easily cause phytotoxicities to crops due to improper use, thus inhibiting the normal growth of crops.

## SUMMARY

According to the above prior art, the present invention aims to provide a new use of 3-(3',4'-methylenedioxy phenyl)-N-n-propyl acrylamide and 3-(3',4'-methylenedioxy phenyl)-piperidine acrylate. These two compounds have good control effects on fungal diseases of crops and are safe for crops.

A use of cinnamamide derivatives in the control of fungal diseases of crops, the cinnamamide derivative is 3-(3',4'-methylenedioxy phenyl)-N-n-propyl acrylamide, the chemical structural formula of which is as below:

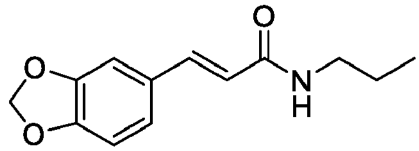

;

alternatively, the cinnamamide derivative is 3-(3',4'-methylenedioxy phenyl)-piperidine acrylate, the chemical structural formula of which is as below:

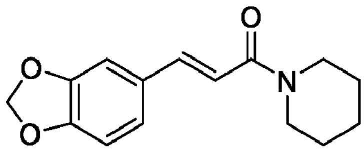

.

Preferably, the fungal disease is at least one of powdery mildew, damping-off, blight, early blight, rot, downy blight, fusarium wilt, gummy stem blight, pythium rot, anthracnose, dry rot, white rot, full rot, ring spot, sheath blight, gray mold, northern leaf blight, F. verticillioide, stalk break, rice blast, and late blight.

Preferably, the crop is at least one of apple, watermelon, pepper, grape, cotton, corn, wheat, rice, potato, rape, marrow bean, flax, tomato, eggplant, cucumber, zucchini, melon, cucurbit, opo squash, and white gourd.

Preferably, the 3-(3',4'-methylenedioxy phenyl)-N-n-propyl acrylamide is used as the only antifungal active ingredient or used in a formulation.

Preferably, the 3-(3',4'-methylenedioxy phenyl)-piperidine acrylate is used as the only antifungal active ingredient or used in a formulation.

The cinnamamide derivatives described above have a broad antifungal spectrum against fungi, are safe for crops, and can avoid the occurrence of phytotoxicity. Their field efficiencies are significantly superior to that of acrylamide fungicide, dimethomorph.

## DESCRIPTION OF THE EMBODIMENTS

The specific technical scheme of the invention is further detailed below through specific embodiments. The following are only some specific embodiments of the invention. It is obvious that the invention is not limited to the following embodiments and may have many variations. All the variations which can be directly derived or associated with the disclosed contents of the invention by those of ordinary skills in the art shall be considered as the protection scope of the invention.

### Embodiment 1 Determination on the antifungal activities of 3-(3',4'-methylenedioxy phenyl)-N-n-propyl acrylamide and 3-(3',4'-methylenedioxy phenyl)-piperidine acrylate ex vivo

### (1) Agents for testing

3-(3',4'-methylenedioxy phenyl)-N-n-propyl acrylamide (at a purity of 99%), 3-(3',4'-methylenedioxy phenyl)-piperidine acrylate (at a purity of 99%), the control agents, 96.5% of chlorothalonil technical (non-systemic broad-spectrum fungicide), 97.2% of carbendazim technical (systemic broad-spectrum fungicide), 97.0% of procymidone technical (systemic fungicide), 96.0% of dimethomorphtechnical ((*E*,*Z*)-4-[3-(4-chlorphenyl)3-(3,4-dimethoxy phenyl)acryloyl]morpholine, systemic fungicide), 97.0% of azoxystrobin technical (systemic broad-spectrum fungicide).

**(2) Plant pathogenic fungi for testing**

*Rhizoctonia solani, Phytophthora infestans, Valsa mali, Phytophthora capsici, Fusarium graminearum, Mycosphaerlla melonis, Pythium aphanidermatum, Colletotrichum capsici, Botryosphaeriana berengeriana, Coniella diplodiella, F. oxysporum* f. sp. *vasinfectum, Gaeumannomyces graminis* var. *graminis* and G. *graminis* var. *tritici, Botryosphaeria berengeriana, C. gossypii, F. graminearum, Thanatephorus cucumeris, Botrytis cinerea, Exserohilum turcicum, F. verticillioide, Sclerotinia sclerotiorum, Pyricularia grisea, Phytophthora infestans* and *F. oxysporum* f. sp. *lini,* totally 23 kinds of plant pathogenic fungi.

Table 1

| Name of Fungus Species | Average Diameter of the Colony (cm) | | | | | | |
|---|---|---|---|---|---|---|---|
| | 3-(3',4'-methylenedioxyphenyl)-N-n -propylacrylamide | 3-(3',4'-methylenedioxy phenyl)-piperidine acrylate | Chlorothalonil | Carbendazim | Procymidone | Azoxystrobin | Dimethomorph |
| *Rhizoctonia solani* | 0.25 | 0.00 | 0.00 | 0.00 | 0.00 | - | - |
| *Phytophthora infestas* | 2.05 | 0.81 | 1.78 | 0.00 | 0.80 | - | - |
| *Valsamali* | 0.65 | 0.00 | 1.65 | - | 0.83 | - | - |
| *Phytophthora capsici* | 0.65 | 0.00 | 0.91 | 0.00 | 5.10 | 6.70 | 0.00 |
| *Fusarium graminearum* | 2.27 | 0.53 | 0.71 | 0.00 | 2.26 | - | - |
| *Mycosphaerlla melonis* | 0.58 | 0.00 | 2.16 | 0.00 | 0.24 | 3.93 | 2.13 |
| *Pythium aphanidermatum* | 0.21 | 0.06 | 1.14 | 0.00 | 6.20 | - | - |
| *Colletotrichum capsici* | 1.66 | 0.28 | 1.95 | 0.00 | 1.19 | - | - |
| *Botryos phaeriana berengeriana* | 4.63 | 0.14 | 0.94 | | 0.20 | - | - |
| *Coniella diplodiella* | 0.00 | 0.00 | 0.00 | 0.00 | 0.06 | - | - |
| *F. oxysporum f. sp. vasinfectum* | 3.03 | 0.40 | 2.45 | 0.00 | 2.57 | 3.03 | 6.03 |
| *Gaeum annomyces graminis var. graminis and G. graminis var.tritici* | 3.05 | 0.39 | 2.51 | - | 2.16 | - | - |
| *Botryosphaeriaberengeriana* | 3.60 | 0.22 | 2.11 | - | 0.15 | - | - |
| *C. gossypii* | 1.74 | 0.10 | 1.45 | 0.00 | 1.62 | 5.37 | 3.93 |
| *F. graminearum* | 3.49 | 0.00 | 1.92 | 1.17 | 3.57 | 6.23 | 6.23 |
| *Thanate phoruscucumeris* | 3.51 | 0.00 | 1.05 | 0.00 | 0.54 | - | - |
| *Botrytiscinerea* | 1.35 | 0.25 | 1.16 | 0.00 | 1.74 | 4.33 | 2.33 |
| *Exserohilum turcicum* | 1.44 | 0.34 | 1.41 | 9.00 | 0.24 | 6.50 | 6.50 |
| *F. verticillioide* | 2.94 | 0.49 | 0.87 | 0.00 | 2.57 | - | - |
| *Sclerotinia sclerotiorum* | 3.28 | 0.00 | 0.00 | 0.00 | 0.00 | 4.40 | 4.77 |

(continued)

| Name of Fungus Species | Average Diameter of the Colony (cm) | | | | | | |
|---|---|---|---|---|---|---|---|
| | **3-(3',4'-methylenedioxy-phenyl)-N-n -propylacryla-mide** | **3-(3',4'-methylene-dioxy phenyl)-pipe-ridine acrylate** | **Chlorothalonil** | **Carbendazim** | **Procymidone** | **Azoxystrobin** | **Dimethomorph** |
| *Pyricularia grisea* | 5.30 | 1.60 | 1.63 | 0.00 | 4.63 | 4.67 | 6.67 |
| *Phytophthora infestans* | 0.00 | 0.00 | 0.20 | 6.80 | 0.00 | 0.00 | 0.00 |
| *F. oxysporum f.sp.lini* | 6.30 | 2.73 | 3.73 | 0.00 | 6.33 | 5.93 | 6.27 |

**(3) Ex vivo bioassay method**

The inhibition of samples for testing on the mycelial growth of plant pathogenic fungi for testing is determined with a growth rate method. 3-(3',4'-methylenedioxy phenyl)-N-n-propyl acrylamide, 3-(3',4'-methylenedioxy phenyl)-piperidine acrylate and five control agents are dissolved with dimethyl sulfoxide (DMSO), then formulated at 5-7 concentrations of different gradients for test following the trial test results, with the same concentration of DMSO as the control solvent, each treatment in triplicate. Fungal cakes with a diameter of 4 mm are taken from the edge of the colony, inoculated into the center of a PDA plate containing different agents of different concentrations and the DMSO control, with one piece of fungal cake inoculated in each plate (with a diameter of 9 mm), and incubated in a constant temperature incubator at a temperature of 22±1.5°C. 7 days later (10-20 days may be needed for some pathogenic fungi), the diameter of the colony is measured with a cross over method according to the mycelial growth profile of the control pathogenic fungi, then the inhibition rate of mycelial growth is calculated.

Table 2

| Name of Fungus Species | Inhibition Rate (%) | | | | | | |
|---|---|---|---|---|---|---|---|
| | 3-(3',4'-methylenedioxy phenyl)-N-n-propylacrylamide | 3-(3',4'-methylenedioxyphenyl)-piperidine acrylate | Chlorothalonil | Carbendazim | Procymidone | Azoxystrobin | Dimethomorph |
| *Rhizoctonia solani* | 96.49 | 100.00 | 100.00 | 100.00 | 100.00 | - | - |
| *Phytophthora infestans* | 42.25 | 77.18 | 49.86 | 100.00 | 77.47 | - | - |
| *Valsamali* | 91.77 | 100.00 | 79.11 | - | 89.02 | - | - |
| *Phytophthora capsici* | 87.74 | 100.00 | 82.83 | 100.00 | 3.77 | 25.55 | 100.00 |
| *Fusarium gramine arum* | 57.57 | 90.09 | 86.73 | 100.00 | 57.70 | - | - |
| *Mycosphaerlla melonis* | 93.26 | 100.00 | 74.88 | 100.00 | 97.21 | 56.33 | 76.33 |
| *Pythiumaphanid ermatum* | 96.87 | 99.10 | 82.99 | 100.00 | 7.46 | - | - |
| *Colletotrichum capsici* | 75.52 | 95.87 | 71.24 | 100.00 | 82.45 | - | - |
| *Botryosphaeriana berengeriana* | 18.77 | 97.54 | 83.51 | - | 96.49 | - | - |
| *Conielladiplodiella* | 100.00 | 100.00 | 100.00 | 100.00 | 99.14 | - | - |
| *F.oxysporum f. sp. vasinfectum* | 58.15 | 94.48 | 66.16 | 100.00 | 64.50 | 66.33 | 33.00 |
| *Gaeuma nnomyce s graminis var. graminis and G. graminis var. tritici* | 57.34 | 94.55 | 64.90 | - | 69.79 | - | - |
| *Botryosp haeria berenger iana* | 47.06 | 96.77 | 68.97 | - | 97.79 | - | - |
| *C. cossypii* | 67.78 | 98.15 | 73.15 | 100.00 | 70.00 | 40.33 | 56.33 |
| *F. gramine arum* | 59.42 | 100.00 | 77.67 | 87.00 | 58.49 | 30.78 | 30.78 |

(continued)

| Name of Fungus Species | Inhibition Rate (%) | | | | | | |
|---|---|---|---|---|---|---|---|
| | 3-(3',4'-methylenedioxy phenyl)-N-n-propylacrylamide | 3-(3',4'-methylenedioxyphenyl)-piperidine acrylate | Chlorothalonil | Carbendazim | Procymidone | Azoxystrobin | Dimethomorph |
| *Thanate phorus cucumer is* | 59.19 | 100.00 | 87.79 | 100.00 | 93.72 | - | - |
| *Botrytis cinerea* | 81.98 | 96.66 | 84.51 | 100.00 | 76.77 | 51.89 | 74.11 |
| *Exserohi lum turcicum* | 76.81 | 94.53 | 77.30 | 0.00 | 96.14 | 27.78 | 27.78 |
| *F. verticilli oide* | 13.02 | 85.50 | 74.26 | 100.00 | 23.96 | - | - |
| *Sclerotin ia sclerotio rum* | 61.86 | 100.00 | 100.00 | 100.00 | 100.00 | 51.11 | 47.00 |
| *Pyricula ria grisea* | 41.11 | 82.22 | 81.89 | 100.00 | 48.56 | 48.11 | 25.89 |
| *Phytopht hora infestans* | 100.00 | 100.00 | 97.78 | 24.44 | 100.00 | 100.00 | 100.00 |
| *F. oxysporu m f.sp.lini* | 30.00 | 69.67 | 58.56 | 100.00 | 29.67 | 34.11 | 30.33 |
| (Note: "-" indicates not determined.) | | | | | | | |

The computational formula is as below: the inhibition rate of mycelial growth (%) = [(the diameter of the control colony - the diameter of the treated colony)/the diameter of the control colony] $\times$ 100.

The inhibition results of each agent at a concentration of 1 mg/mL on the mycelial growth of plant pathogenic fungi are shown in Tables 1 and 2.

It is indicated from the above determination results (Table 1, 2) that, 3-(3',4'-methylenedioxy phenyl)-N-n-propyl acrylamide has a strong inhibition on the mycelial growth of the following 8 plant pathogenic fungi: *Rhizoctonia solani, Valsa mali, Phytophthora capsici, Mycosphaerlla melonis, Pythium aphanidermatum, Coniella diplodiella, Botrytis cinerea* and *Phytophthora infestans,* with the inhibition rate at the concentration of 1 mg/mL between 81.98% and 100%. Wherein, its antifungal activities against *Valsa mali, Mycosphaerlla melonis* and *Pythium aphanidermatum* are superior to those of the control agent, chlorothalonil; its antifungal activities against *Rhizoctonia solani, Phytophthora capsici, Coniella diplodiella, Botrytis cinerea* and *Phytophthora infestans* are comparable to those of chlorothalonil. Its antifungal activity against *Phytophthora infestans* is superior to that of the control agent, carbendazim; its antifungal activities against *Rhizoctonia solani, Mycosphaerlla melonis, Pythium aphanidermatum* and *Coniella diplodiella* are comparable to those of carbendazim. Its antifungal activities against *Phytophthora capsici* and *Pythium aphanidermatum* are significantly superior to those of the control agent, procymidone; its antifungal activities against *Rhizoctonia solani, Valsa mali, Mycosphaerlla melonis, Coniella diplodiella, Botrytis cinerea* and *Phytophthora infestans* are comparable to those of procymidone. Its antifungal activities against *Phytophthora capsici* and *Botrytis cinerea* are significantly superior to those of the control agent, Azoxystrobin; its antifungal activity against *Phytophthora infestans* is comparable to that of Azoxystrobin. Its antifungal activities against *Mycosphaerlla melonis* and *Botrytis cinerea* are superior to those of the control agent, dimethomorph; its antifungal activity against *Phytophthora infestans* is comparable to that of dimethomorph. The supplementary determination results further show that, the antifungal activity of 3-(3',4'-methylenedioxy phenyl)-N-n-propyl acrylamide against *Phytophthora capsici* is superior to that of the control agent, hymexazol (3-hydroxy-5-methyl isoxazole, systemic broad-spectrum fungicide); and its antifungal activity against *Pythium ultimum* is superior to that of the control agent, carbendazim.

3-(3',4'-methylenedioxy phenyl)-piperidine acrylate has a strong inhibition on the mycelial growth of the following 21 plant pathogenic fungi: *Rhizoctonia solani, Valsa mali, Phytophthora capsici, Fusarium graminearum, Mycosphaerlla melonis, Pythium aphanidermatum, Colletotrichum capsici, Botryosphaeriana berengeriana, Coniella diplodiella, F. oxysporum f. sp. vasinfectum, Gaeumannomyces graminis var. graminis* and *G. graminis var. tritici, Botryosphaeria berengeriana, C. gossypii, F. graminearum, Thanatephorus cucumeris, Botrytis cinerea, Exserohilum turcicum, F. verticillioide, Sclerotinia sclerotiorum, Pyricularia grisea,* and *Phytophthora infestans,* with the inhibition rate at the concentration of 1 mg/mL between 82.22% and 100%, wherein its inhibition rates on the mycelial growth of the following 9 plant pathogenic fungi are all up to 100%: *Rhizoctonia solani, Valsa mali, Phytophthora capsici, Mycosphaerlla melonis, Coniella diplodiella, F. graminearum, Thanatephorus cucumeris, Sclerotinia sclerotiorum* and *Phytophthora infestans.* It is obvious that 3-(3',4'-methylenedioxy phenyl)-piperidine acrylate is a broad-spectrum fungistatic active compound. Wherein its antifungal activities against *Phytophthora infestans, Valsa mali, Phytophthora capsici, Mycosphaerlla melonis, Pythium aphanidermatum, Colletotrichum capsici, Botryosphaeriana berengeriana, F. oxysporum f. sp. vasinfectum, Gaeumannomyces graminis var. graminis* and *G. graminis var. tritici, Botryosphaeria berengeriana, C. gossypii, F. graminearum, Thanatephorus cucumeris, Botrytis cinerea, Exserohilum turcicum, F. verticillioide* and *F. oxysporum f.sp.lini* are superior to those of the control agent, chlorothalonil; its antifungal activities against *Rhizoctonia solani, Fusarium graminearum, Coniella diplodiella, Sclerotinia sclerotiorum, Pyricularia grisea* and *Phytophthora infestans* are comparable to those of chlorothalonil. Its antifungal activities against *F. graminearum, Exserohilum turcicum* and *Phytophthora infestans* are superior to those of the control agent, carbendazim; its antifungal activities against *Phytophthora capsicum, Mycosphaerlla melonis, Pythium aphanidermatum, Colletotrichum capsici, F. oxysporum f sp. vasinfectum, C. gossypii, Thanatephorus cucumeris, Botrytis cinerea, Coniella diplodiella* and *Sclerotinia sclerotiorum* are comparable to those of carbendazim. Its antifungal activities against *Valsa mali, Colletotrichum capsici, F. oxysporum f. sp. vasinfectum, Gaeumannomyces graminis var. graminis* and *G. graminis var. tritici* and *Thanatephorus cucumeris* are superior to those of the control agent, procymidone; its antifungal activities against *Phytophthora capsici, Fusarium graminearum, Pythium aphanidermatum, C. gossypii, F. graminearum, Botrytis cinerea, F. verticillioide, Pyricularia grisea* and *F. oxysporum fsp.lini* are significantly superior to those of procymidone; its antifungal activities against *Rhizoctonia solani, Phytophthora infestans, Mycosphaerlla melonis, Botryosphaeriana berengeriana, Coniella diplodiella, Botryosphaeria berengeriana, Exserohilum turcicum, Sclerotinia sclerotiorum* and *Phytophthora infestans* are comparable to those of procymidone. Its antifungal activities against *F. graminearum, F. oxysporum f. sp. vasinfectum, Botrytis cinerea,* Sclerotinia sclerotiorum, *Pyricularia grisea, Mycosphaerlla melonis, C. gossypii, F. oxysporum f.sp.lini, Exserohilum turcicum* and *Phytophthora capsici* are significantly superior to those of the control agent, Azoxystrobin; its antifungal activity against *Phytophthora infestans* is comparable to that of Azoxystrobin. Its antifungal activities against *F. graminearum, F. oxysporum f. sp. vasinfectum, Botrytis cinerea, Sclerotinia sclerotiorum, Pyricularia grisea, Mycosphaerlla melonis, C. gossypii, F. oxysporum f.sp.lini* and *Exserohilum turcicum* are significantly superior to those of the control agent, dimethomorph; its antifungal activities against *Phytophthora infestans* and *Phytophthora capsici* are comparable to those

of dimethomorph. The supplementary determination results further show that, the antifungal activity of 3-(3',4'-methylenedioxy phenyl)-piperidine acrylate against *Phytophthora capsici* is superior to that of the control agent, hymexazol; its antifungal activity against *Pythium ultimum* is superior to that of the control agent, carbendazim; its antifungal activity against *Rhizoctonia solani* is superior to that of chlorothalonil, dimethomorph and azoxystrobin.

**Embodiment 2 Determination on the toxicity of 3-(3',4'-methylenedioxy phenyl)-piperidine acrylate against plant pathogenic fungi**

**(1) Plant pathogenic fungi for testing**

*Exserohilum turcicum, Botrytis cinerea, Sclerotinia sclerotiorum, Valsa mali, Fusarium graminearum, F. graminearum, Pyricularia grisea, Colletotrichum capsici, Phytophthora infestans,* totally 9 kinds of plant pathogenic fungi.

**(2) Agents for testing**

3-(3',4'-methylenedioxy phenyl)-piperidine acrylate, the control agents 96.5% of chlorothalonil technical and 97.0% of procymidone technical. Agents for testing and the control agents chlorothalonil and procymidone are treated at 5-8 concentrations of different gradients on the basis of preliminary tests to ensure that the inhibition rates for treatments at all the concentrations are between 10% and 90%.

**(3) Determination of antifungal activity**

For specific determination methods, with reference to Embodiment 1. The concentration of active ingredients in the culture medium is used as the testing concentration to calculate the toxic regression equation (Y=bx+a) and the median inhibition concentration $EC_{50}$, 95% confidence limit, and relative toxicity. Relative toxicity (compared to chlorothalonil) = $EC_{50}$ of chlorothalonil / $EC_{50}$ of 3-(3',4'-methylenedioxy phenyl)-piperidine acrylate, and relative toxicity (compared to procymidone) = $EC_{50}$ of procymidone / $EC_{50}$ of 3-(3',4'-methylenedioxy phenyl)-piperidine acrylate.

**(4) Determination results of toxicity**

It is indicated from the determination results of toxicity (Table 3) that, the $EC_{50}$ (median inhibition concentration) of 3-(3',4'-methylenedioxy phenyl)-piperidine acrylate (in Table 3, indicated with 66#) against the following 7 pathogenic fungi: *Exserohilum turcicum, Valsa mali, Fusarium graminearum, F. graminearum, Magnaporthe grisea, Colletotrichum capsici* and *Phytophthora infestans,* are 0.13, 0.09, 0.08, 0.12, 0.18, 0.13 and 0.09 mg/mL, respectively; the relative toxicities are 3.21, 4.68, 5.89, 1.82, 2.45, 3.23 and 1.23 times that of chlorothalonil, respectively; and 0.82, 4.78, 1.80, 6.83, 1.73, 4.13 and 8.36 times that of procymidone, respectively. It is evaluated based on $EC_{50}$ that, 3-(3',4'-methylenedioxy phenyl)-piperidine acrylate has stronger inhibition effects on *Valsa mali, Fusarium graminearum* and *Phytophthora infestans,* which are superior to those of common fungicides, chlorothalonil and procymidone.

Table 3

| Pathogenic Fungi for Testing | Agents for testing | Toxic Regression Equation | $EC_{50}$ (mg/mL) | 95% Confidence Limit (mg/mL) | Relative Toxicity (Compared to Chlorothalonil) | Relative Toxicity (Compared to Procymidone) |
|---|---|---|---|---|---|---|
| *Exserohilum turcicum* | 66# | Y=2.0083x +0.7672 | 0.1281 | 0.1056-0.1554 | 3.21 | 0.82 |
| | Chlorothalonil | Y=2.1604x-0.6469 | 0.4110 | 0.3626-0.4658 | 1.00 | 0.26 |
| | Procymidone | Y=1.6922x +1.5804 | 0.1049 | 0.0778-0.1416 | 3.92 | 1.00 |
| *Valsa mali* | 66# | Y=4.2185x-3.2307 | 0.0894 | 0.0740-0.1079 | 4.68 | 4.78 |
| | Chlorothalonil | Y=5.6834x-9.8994 | 0.4184 | 0.3476-0.5036 | 1.00 | 1.02 |
| | Procymidone | Y=2.1334x-0.6124 | 0.4273 | 0.3103-0.5885 | 0.98 | 1.00 |
| *Fusarium graminearum* | 66# | Y=2.7228x-0.1764 | 0.0796 | 0.0658-0.0965 | 5.89 | 1.80 |
| | Chlorothalonil | Y=3.1448x-3.4004 | 0.4690 | 0.4395-0.5005 | 1.00 | 0.31 |
| | Procymidone | Y=2.3947x-0.1652 | 0.1435 | 0.1133-0.1648 | 3.27 | 1.00 |
| *F. graminearum* | 66# | Y=1.9644x +0.8842 | 0.1245 | 0.1081-0.1436 | 1.82 | 6.83 |
| | Chlorothalonil | Y=2.3277x-0.4899 | 0.2269 | 0.1572-0.3315 | 1.00 | 3.75 |
| | Procymidone | Y=4.8620x-9.2420 | 0.8497 | 0.7841-0.9207 | 0.27 | 1.00 |

(continued)

| Pathogenic Fungi for Testing | Agents for testing | Toxic Regression Equation | $EC_{50}$ (mg/mL) | 95% Confidence Limit (mg/mL) | Relative Toxicity (Compared to Chlorothalonil) | Relative Toxicity (Compared to Procymidone) |
|---|---|---|---|---|---|---|
| *Magnaporthe grisea* | 66# | Y=2.2207x+ 0.0049 | 0.1776 | 0.1496-0.2108 | 2.45 | 1.73 |
| | Chlorothalonil | Y=3.2474x- 3.5704 | 0.4357 | 0.3428-0.5537 | 1.00 | 0.71 |
| | Procymidone | Y=2.2842x- 0.6832 | 0.3077 | 0.2336-0.4051 | 1.42 | 1.00 |
| *Colletotrichum capsici* | 66# | Y=2.2501x +0.2791 | 0.1253 | 0.0993-0.1582 | 3.23 | 4.13 |
| | Chlorothalonil | Y=1.4953x +1.1020 | 0.4044 | 0.3665-0.4462 | 1.00 | 1.28 |
| | Procymidone | Y=2.1930x- 0.9522 | 0.5178 | 0.3955-0.6779 | 0.78 | 1.00 |
| *Phytophthora infestans* | 66# | Y=4.8942x- 4.6337 | 0.0930 | 0.0790-0.1094 | 1.23 | 8.36 |
| | Chlorothalonil | Y=3.5953x- 2.4050 | 0.1147 | 0.1058-0.1244 | 1.00 | 6.78 |
| | Procymidone | Y=4.8501x- 9.0211 | 0.7778 | 0.7192-0.8413 | 0.15 | 1.00 |
| *Botrytis cinerea* | 66# | Y=2.9330x- 1.8207 | 0.2116 | 0.1736-0.2578 | 0.84 | 0.37 |
| | Chlorothalonil | Y=6.8076x- 10.3021 | 0.1769 | 0.1658-0.1888 | 1.00 | 0.45 |
| | Procymidone | Y=4.4320x- 3.3956 | 0.0789 | 0.0672-0.0915 | 2.24 | 1.00 |

(continued)

| Pathogenic Fungi for Testing | Agents for testing | Toxic Regression Equation | $EC_{50}$ (mg/mL) | 95% Confidence Limit (mg/mL) | Relative Toxicity (Compared to Chlorothalonil) | Relative Toxicity (Compared to Procymidone) |
|---|---|---|---|---|---|---|
| *Sclerotinia sclerotiorum* | 66# | Y=6.2059x-9.6198 | 0.2269 | 0.2001-0.2573 | 0.28 | 0.31 |
| | Chlorothalonil | Y=3.7741x-1.7837 | 0.0627 | 0.0541-0.0727 | 1.00 | 1.13 |
| | Procymidone | Y=2.9322x-0.4218 | 0.0706 | 0.0577-0.0865 | 0.89 | 1.00 |

3-(3',4'-methylenedioxy phenyl)-piperidine acrylate has great development value for its simple structure and easy synthesis, broad fungicidal spectrum, and superior antifungal activities against most pathogenic fungi relative to common chemical fungicides, chlorothalonil and procymidone. Compared to the structures of the current commercialized fungicides, its distinct chemical structure and strong broad-spectrum antifungal activity indicate that it is expected to be the leading structure of new agricultural fungicides, and it is highly possible to creat new botanical fungicides, which is of great theoretical and practical significance to the innovation of scientific and technological achievements.

**Embodiment 3 In-vivo determination of 3-(3',4'-methylenedioxy phenyl)-N-n-propyl acrylamide and 3-(3',4'-methylenedioxy phenyl)-piperidine acrylate in a greenhouse**

**Formulation of emulsifiable concentrate**

3.88 g of 3-(3',4'-methylenedioxy phenyl)-N-n-propyl acrylamide was weighed and dissolved in 25 g of absolute ethyl alcohol, then 6 g of emulsifier 0203B was added, and mixed uniformly with stirring to get 10% of 3-(3',4'-methylenedioxy phenyl)-N-n-propyl acrylamide EC.

5.61 g of 3-(3',4'-methylenedioxy phenyl)-piperidine acrylate was weighed and dissolved in 25 g of absolute ethyl alcohol, then 6 g of emulsifier 0203B was added, and mixed uniformly with stirring to get 14% of 3-(3',4'-methylenedioxy phenyl)-piperidine acrylate EC.

**3.1 In-vivo determination of 3-(3',4'-methylenedioxy phenyl)-N-n-propyl acrylamide and 3-(3',4'-methylenedioxy phenyl)-piperidine acrylate on the control of zucchini powdery mildew in a greenhouse**

**(1) In-vivo determination method**

Zucchini (Variety: Wuwei Xianglin extra-early 1$^{st}$ generation) was cultured in pots in a greenhouse, and inoculated with *Erysiphe cucurbitacearum* or *Sphaerotheca cucurbitae* at the stage of 3 to 4 leaves. The first application was started at the early onset (onset at the first true leaf: first appearance of spots), comprising 10% of 3-(3',4'-methylenedioxy phenyl)-N-n-propyl acrylamide EC and 14% of 3-(3',4'-methylenedioxy phenyl)-piperidine acrylate EC, which were both diluted at four concentrations of 0.50, 0.333, 0.25, 0.20 mg/mL (active ingredients), additionally clear water was used as the control. Both sides of the leaves were sprayed evenly with a small hand-held sprayer so that the leaves were wetted by the liquor without loss. Applications were conducted every 7 days consecutively for 4 times. 10 days after the fourth application, the number of sick leaves at each grade of powdery mildew was investigated for the whole plant following the grading standard of 9 grades, to calculate the disease index and the control effect. The computational formula is as below:

$$\text{Disease index} = [\,(\text{Number of sick leaves at each grade} \times \text{Corresponding grade value}) / (\text{Total number of investigated leaves} \times 9)] \times 100;$$

$$\text{Control effect} = (\text{Disease index of the clear water control} - \text{Treated disease index}) / \text{Disease index of the clear water control} \times 100.$$

**(2) Determination results**

It is indicated from the determination results (Table 4) that, the application of 3-(3',4'-methylenedioxy phenyl)-N-n-propyl acrylamide at the early onset has a good control effect on zucchini powdery mildew. The control effects at the concentration of 0.50 and 0.333 mg/mL are 91.09% and 77.13%, respectively, which are superior to the control effects of 3-(3',4'-methylenedioxy phenyl)-piperidine acrylate (87.13% and 67.06%).

Table 4

| Name of Agents | Concentration of Agents (mg/mL) | Disease Index 10 days after the Fourth Application | Control Effect (%) |
|---|---|---|---|
| 10% of 3-(3',4'-methylenedioxy phenyl)-N-n-propyl acrylamide EC | 0.50 | 7.19 | 91.09 |
| | 0.333 | 18.46 | 77.13 |
| | 0.25 | 27.60 | 65.81 |
| | 0.20 | 37.33 | 53.76 |
| 14% of 3-(3',4'-methylenedioxy phenyl)-piperidine acrylate EC | 0.50 | 10.39 | 87.13 |
| | 0.333 | 26.59 | 67.06 |
| | 0.25 | 34.60 | 57.14 |
| | 0.20 | 38.00 | 52.93 |
| CK (clear water) | - | 80.73 | - |

**3.2 In-vivo determination of 3-(3',4'-methylenedioxy phenyl)-N-n-propyl acrylamide and 3-(3',4'-methylenedioxy phenyl)-piperidine acrylate on the control of marrow bean powdery mildew in a greenhouse**

**(1) In-vivo determination method**

Marrow bean (Variety: Thailand Jiadouwang) was cultured in pots in a greenhouse, and inoculated with *E. polygoni* at the stage of 4 leaves. The first application was started at the early onset (onset at the first true leaf: first appearance of spots), comprising 10% of 3-(3',4'-methylenedioxy phenyl)-N-n-propyl acrylamide EC and 14% of 3-(3',4'-methylenedioxy phenyl)-piperidine acrylate EC, which were both diluted at three concentrations of 0.20, 0.143, 0.10 mg/mL (active ingredients), the control agent, 12.5% of myclobutanil EC (North China pharmaceutical Group, Ainuo Co. Ltd.), was also diluted at three concentrations of 0.20, 0.143, 0.10 mg/mL (active ingredients), additionally clear water was used as the control. Both sides of the leaves were sprayed evenly with a small hand-held sprayer so that the leaves were wetted by the liquor without loss. Applications were conducted every 7 days consecutively for 4 times. 10 days after the fourth application, the number of sick leaves at each grade of powdery mildew was investigated for the whole plant following the grading standard of 9 grades, to calculate the disease index and the control effect.

**(2) Determination results**

It is indicated from the determination results (Table 5) that, the application of 3-(3',4'-methylenedioxy phenyl)-N-n-propyl acrylamide at the early onset has a good control effect on marrow bean powdery mildew. The control effects at the concentrations of 0.20, 0.143 and 0.10 mg/mL are 93.53%, 92.58% and 84.19%, respectively. 3-(3',4'-methylenedioxy phenyl)-piperidine acrylate also has a good control effect on marrow bean powdery mildew. The control effects at the concentrations of 0.20, 0.143 and 0.10mg/mL are 91.55%, 89.40% and 74.97%, respectively, which is slightly inferior to those of 3-(3',4'-methylenedioxy phenyl)-N-n-propyl acrylamide. They are both inferior to the control effects of 12.5% myclobutanil EC (100%, 100% and 99.61%) at the same concentration.

Table 5

| Name of Agents | Concentration of Agents (mg/mL) | Average Disease Index before Application | Disease Index 10 days after the Fourth Application | Control Effect (%) |
|---|---|---|---|---|
| 10% of 3-(3',4'-methylenedioxy phenyl)-N-n-propyl acrylamide EC | 0.20 | 2.98 | 3.33 | 93.53 |
| | 0.143 | | 3.82 | 92.58 |
| | 0.10 | | 8.14 | 84.19 |
| 14% of 3-(3',4'-methylenedioxy phenyl)-piperidine acrylate EC | 0.20 | 2.98 | 4.35 | 91.55 |
| | 0.143 | | 5.46 | 89.40 |
| | 0.10 | | 12.89 | 74.97 |

(continued)

| Name of Agents | Concentration of Agents (mg/mL) | Average Disease Index before Application | Disease Index 10 days after the Fourth Application | Control Effect (%) |
|---|---|---|---|---|
| 12.5% of myclobutanil EC | 0.20 | 2.98 | 0.00 | 100.00 |
| | 0.143 | | 0.00 | 100.00 |
| | 0.10 | | 0.20 | 99.61 |
| CK (clear water) | - | 2.98 | 51.50 | - |

**3.3 In-vivo determination of 3-(3',4'-methylenedioxy phenyl)-N-n-propyl acrylamide and 3-(3',4'-methylenedioxy phenyl)-piperidine acrylate on the control of wheat powdery mildew in a greenhouse**

**(1) In-vivo determination method**

Winter wheat (Variety: Huixian Red) was sown in pots in a greenhouse, and inoculated with a fresh spore suspension of *Blumeria graminis f.sp.tritici* by spraying on its leaves and stems at the stage of 2 leaves. The first application was started at the early onset of powdery mildew. Both sides of the leaves were sprayed evenly with a small hand-held sprayer so that the leaves were wetted by the liquor without loss. 10% of 3-(3',4'-methylenedioxy phenyl)-N-n-propyl acrylamide EC and 14% of 3-(3',4'-methylenedioxy phenyl)-piperidine acrylate EC were both diluted at two concentrations of 0.20 and 0.143 mg/mL (active ingredients), and the control agent, 15% of triazolone WP, was also diluted at two concentrations of 0.20 and 0.143 mg/mL (active ingredients), additionally clear water was used as the control. Applications were conducted every 7 days consecutively for 3 times. 10 days after the last application, the number of sick leaves at each grade of powdery mildew was investigated following the grading standard of 9 grades, to calculate the disease index and the control effect.

**(2) Determination results**

It is indicated from the determination results (Table 6) that, the application of 3-(3',4'-methylenedioxy phenyl)-N-n-propyl acrylamide at the early onset has a good control effect on wheat powdery mildew. The control effect at the concentration of 0.20 mg/mL can be up to 86.97%, which is superior to the control effect of 3-(3',4'-methylenedioxy phenyl)-piperidine acrylate (59.11%), which are both significantly inferior to the control effects of 15% triazolone WP(100% and 100%) at the same concentration.

Table 6

| Name of Agents | Concentration of Agents (mg/mL) | Average Disease Index before Application | Disease Index 10 days after the Third Application | Control Effect (%) |
|---|---|---|---|---|
| 10% of 3-(3',4'-methylenedioxy phenyl)-N-n-propyl acrylamide EC | 0.20 | 2.13 | 10.33 | 86.97 |
| | 0.143 | | 28.55 | 63.99 |
| 14% of 3-(3',4'-methylenedioxy phenyl)-piperidine acrylate EC | 0.20 | 2.13 | 32.42 | 59.11 |
| | 0.143 | | 31.16 | 60.70 |
| 15% of triazolone WP | 0.20 | 2.13 | 0.00 | 100.00 |
| | 0.143 | | 0.00 | 100.00 |
| CK (clear water) | - | 2.13 | 79.29 | - |

**3.4 In-vivo determination of the modes of 3-(3',4'-methylenedioxy phenyl)-N-n-propyl acrylamide and 3-(3',4'-methylenedioxy phenyl)-piperidine acrylate on the control of wheat powdery mildew in a greenhouse**

**(1) In-vivo determination method**

Winter wheat (Variety: Huixian Red) was sown in pots in a greenhouse, and inoculated with a fresh spore suspension of *Blumeria graminis f.sp.tritici* by spraying on its leaves and stems at the stage of 2 leaves, for which one treatment was inoculation followed by application 48 h later, the control is sprayed with clear water; another treatment is application followed by inoculation 48 h later. 10% of 3-(3',4'-methylenedioxy phenyl)-N-n-propyl acrylamide EC and 14% of 3-(3',4'-methylenedioxy phenyl)-piperidine acrylate EC were both diluted at two concentrations of 0.20 and 0.143 mg/mL (active ingredients), and the control agent, 15% of triazolone WP (Jiangsu Sword Agrochemicals Co., Ltd.) was also diluted at two concentrations of 0.20 and 0.143 mg/mL (active ingredients). Both sides of the leaves were sprayed evenly with a small hand-held sprayer so that the leaves were wetted by the liquor without loss. Applications were conducted every 7 days consecutively for 3 times. 10 days after the last application, the number of sick leaves at each grade of powdery mildew was investigated following the grading standard of 9 grades, to calculate the disease index and the control effect.

**(2) Determination results**

It is indicated from the determination results (Table 7) that, from the view of the control effects on wheat powdery mildew at different concentrations, 3-(3',4'-methylenedioxy phenyl)-N-n-propyl acrylamide has a good control effect on wheat powdery mildew. The control effects at the concentrations of 0.20 and 0.143 mg/mL are between 91.01% and 95.04% and between 85.66% and 86.60%, respectively; 3-(3',4'-methylenedioxy phenyl)-piperidine acrylate has a good control effect on wheat powdery mildew at the concentration of 0.20 mg/mL, between 85.59% and 86.54%; and the control effect at the concentration of 0.143 mg/mL is usually between 61.61% and 69.84%. From the view of the control effects on wheat powdery mildew by different modes, for the 2 compounds at the concentrations of 0.20 and 0.143 mg/mL, the control effects for application followed by inoculation and inoculation followed by application are comparable, indicating that the 2 compounds have both protective and therapeutical effects on the control of wheat powdery mildew, and the protective and therapeutical effects are comparable.

The control agent, 15% of triazolone WP, has a very high control effect on wheat powdery mildew, both up to 100% at the concentration of 0.20 and 0.143 mg/mL, which has both protective and therapeutical effects on the control of wheat powdery mildew, and the protective and therapeutical effects are comparable.

Table 7

<table>
<tr><th>Name of Agents</th><th>Concentration of Agents (mg/mL)</th><th>Modes</th><th>Disease Index 10 Days after the Third Application</th><th>Control Effect (%)</th></tr>
<tr><td rowspan="4">10% off 3-(3',4'-methylenedioxy phenyl)-N-n-propyl acrylamide EC</td><td rowspan="2">0.20</td><td>Application Followed by Inoculation</td><td>6.42</td><td>91.01</td></tr>
<tr><td>Inoculation Followed by Application</td><td>3.54</td><td>95.04</td></tr>
<tr><td rowspan="2">0.143</td><td>Application Followed by Inoculation</td><td>10.24</td><td>85.66</td></tr>
<tr><td>Inoculation Followed by Application</td><td>9.57</td><td>86.60</td></tr>
</table>

(continued)

| Name of Agents | Concentration of Agents (mg/mL) | Modes | Disease Index 10 Days after the Third Application | Control Effect (%) |
|---|---|---|---|---|
| 14% of 3-(3',4'-methylenedioxy phenyl)-piperidine acrylate EC | 0.20 | Application Followed by Inoculation | 10.29 | 85.59 |
| | | Inoculation Followed by Application | 9.61 | 86.54 |
| | 0.143 | Application Followed by Inoculation | 21.54 | 69.84 |
| | | Inoculation Followed by Application | 27.42 | 61.61 |
| 15% of triazoloneWP | 0.20 | Application Followed by Inoculation | 0.00 | 100.00 |
| | | Inoculation Followed by Application | 0.00 | 100.00 |
| | 0.143 | Application Followed by | 0.00 | 100.00 |
| | | Inoculation Followed by Application | 0.00 | 100.00 |
| CK (clear water) | - | - | 71.42 | - |

**3.5 In-vivo determination of 3-(3',4'-methylenedioxy phenyl)-N-n-propyl acrylamide and 3-(3',4'-methylenedioxy phenyl)-piperidine acrylate on the control of damping-off of solanceous vegetables in a greenhouse**

**(1) In-vivo determination method**

Sick soil of damping-off (*P. aphanidermatum, P.capsici*) was collected from the fields of tomatoes, eggplants and peppers in a solar greenhouse, and mixed evenly in equal proportion. Tomatoes (Variety: Song Tian Fen Yang Yang, 100 grains), eggplants (Variety: Lanza No. 2 $F_1$ long eggplant, 100 grains), pepper (Longjiao No. 2 $F_1$, 100 grains) were seeded quantitatively with the sick soil in pots (diameter: 15 cm) in a greenhouse, additionally with sterile vermiculite as the control (each 100 grains for determining the germination rate). 10% of 3-(3',4'-methylenedioxy phenyl)-N-n-propyl acrylamide EC and 14% of 3-(3',4'-methylenedioxy phenyl)-piperidine acrylate EC were both diluted at a concentration of 0.80 mg/mL (active ingredients); the control agents, 50% of carbendazim WP (Hebei Guanlong Agrochemicals Co., Ltd.) and 75% of chlorothalonil WP (Shandong Weifang Rainbow Chemical Co., Ltd.) were also diluted at a concentration of 0.80 mg/mL (active ingredients); additionally clear water was used as the control, and 200 mL liquor was filled for each pot. Mortality of seedlings was investigated after the seedlings had grown 2 true leaves, and the control effect of each treatment on damping-off was calculated. The computational formula is as below:

$$\text{Mortality of Seedlings (\%)} = [\text{number of survival seedlings in the seeded grains} - \text{number of seeded grains} \times (100\% - \text{germination rate})]/\text{number of seeded grains} \times 100;$$

$$\text{Control Effect (\%)} = (\text{mortality of control seedlings} - \text{mortality of treated seedlings}) / \text{mortality of control seedlings} \times 100.$$

**(2) Determination results**

It is indicated from the determination results (Table 8) that, 3-(3',4'-methylenedioxy phenyl)-piperidine acrylate has high control effects on damping-off of tomatoes, eggplants and peppers. The control effects at the concentration of 0.80 mg/mL are 61.41%, 63.47%% and 67.71%, respectively, which are significantly superior to the control effects of the control agents, 75% chlorothalonil WP and 50% carbendazim WP, on damping-off of tomatoes, eggplants and peppers (8.01%~37.97% and 12.09%~18.45%). The control effects of 3-(3',4'-methylenedioxy phenyl)-N-n-propyl acrylamide on damping-off of tomatoes and eggplants are poor, which are comparable to those of the control agents, 75% chlorothalonil WP and 50% carbendazim WP, and its control effect on damping-off of peppers is comparable to that of chlorothalonil, while superior to that of carbendazim.

Table 8

| Name of Solanceous Vegetables | Name of Agents | Concentration of Agents (mg/mL) | Mortality of Seedlings (%) | Control Effect (%) |
|---|---|---|---|---|
| Tomato | 10% of 3-(3',4'-methylenedioxy phenyl)-N-n-propyl acrylamide EC | 0.80 | 73.70 | 11.95 |
| | 14% of 3-(3',4'-methylenedioxy phenyl)-piperidine acrylate EC | 0.80 | 32.30 | 61.41 |
| | 75% of chlorothalonil WP | 0.80 | 77.00 | 8.01 |
| | 50% of carbendazim WP | 0.80 | 73.00 | 12.78 |
| | CK (clear water) | - | 83.70 | - |
| Eggplant | 10% of 3-(3',4'-methylenedioxy phenyl)-N-n-propyl acrylamide EC | 0.80 | 73.70 | 9.35 |
| | 14% of 3-(3',4'-methylenedioxy phenyl)-piperidine acrylate EC | 0.80 | 29.70 | 63.47 |
| | 75% of chlorothalonil WP | 0.80 | 73.00 | 10.21 |
| | 50% of carbendazim WP | 0.80 | 66.30 | 18.45 |
| | CK (clear water) | - | 81.30 | - |
| Pepper | 10% of 3-(3',4'-methylenedioxy phenyl)-N-n-propyl acrylamide EC | 0.80 | 58.70 | 29.02 |
| | 14% of 3-(3',4'-methylenedioxy phenyl)-piperidine acrylate EC | 0.80 | 26.70 | 67.71 |
| | 75% of chlorothalonil WP | 0.80 | 51.30 | 37.97 |
| | 50% of carbendazim WP | 0.80 | 72.70 | 12.09 |
| | CK (clear water) | - | 82.70 | - |

**3.6 In-vivo determination of the modes of 3-(3',4'-methylenedioxy phenyl)-piperidine acrylate on the control of cucumber powdery mildew in a greenhouse**

**(1) In-vivo determination method**

Cucumber (Variety: Tianjin Mici) was sown in big pots (with a diameter of 30 cm) in a greenhouse. The fresh sick leaves were harvested from cucumber with powdery mildew (E. cichoracearum) in a solar greenhouse in Yu Zhong County, and formulated into a spore suspension, which was sprayed evenly onto both sides of the cucumber leaves

with a small hand-held sprayer and inoculated, at which cucumber was during the first flowering period. Keeping humidity, sprinkling water onto the ground in the evening, spraying water onto the leave surfaces, closing the door and windows of the greenhouse, thus creating favorable conditions for the occurrence of powdery mildew. 14% of 3-(3',4'-methylenedioxy phenyl)-piperidine acrylate EC was diluted at three concentrations of 1.00, 0.50 and 0.333 mg/mL (active ingredients); the control agent, 10% of dimethomorph EW (Langfang Experimental Pesticide Factory, Institute of Plant Protection, Chinese Academy of Agricultural Sciences) was diluted at a concentration of 0.50 mg/mL; additionally clear water was used as the control, and treated in two modes: inoculation followed by application and application followed by inoculation. The instrument for application is a small hand-held sprayer. Both sides of the cucumber leaves were sprayed evenly so that the leaves were wetted by the liquor without loss. Applications were conducted every 7 days consecutively for 4 times. 10 days after the fourth application, the number of sick leaves at each grade of powdery mildew was investigated for the whole plant following the grading standard of 9 grades, to calculate the disease index and the control effect.

Table 9

| Name of Agents | Concentration of Agents (mg/mL) | Modes | Disease Index 10 Days after the Fourth Application | Control Effect (%) |
|---|---|---|---|---|
| 14% of 3-(3',4'-methylenedioxy phenyl)-piperidine acrylate EC | 1.00 | Inoculation Followed by Application | 3.34 | 89.29 |
| | | Application Followed by Inoculation | 1.49 | 95.22 |
| | 0.50 | Inoculation Followed by Application | 14.34 | 53.99 |
| | | Application Followed by Inoculation | 7.16 | 77.03 |
| | 0.333 | Inoculation Followed by Application | 16.42 | 47.32 |
| | | Application Followed by Inoculation | 7.63 | 75.52 |
| 10% of Dimethomorph EW | 0.50 | Inoculation Followed by Application | 8.84 | 71.64 |
| | | Application Followed by Inoculation | 5.87 | 81.17 |
| CK (clear water) | - | - | 31.17 | - |

**(2) Determination results**

It is indicated from the determination results (Table 9) that, from the view of the control effects on cucumber powdery mildew at different concentrations, 3-(3',4'-methylenedioxy phenyl)-piperidine acrylate has a good control effect on cucumber powdery mildew, the control effect at the concentration of 1.00 mg/mL is between 89.29% and 95.22%; from the view of the control effects on cucumber powdery mildew by different modes, at the concentrations of 1.00, 0.50 and 0.333 mg/mL, the control effects on cucumber powdery mildew in the mode of application followed by inoculation are all superior to the control effects in the mode of inoculation followed by application; moreover, the lower the concentration is, the control effect in the mode of application followed by inoculation is more significant, indicating that the compound has both protective and therapeutical effects on the control of cucumber powdery mildew, and the protective

effects are superior to the therapeutical effects.

**3.7 In-vivo determination of the systemic action of 3-(3',4'-methylenedioxy phenyl)-piperidine acrylate on the control of cucumber powdery mildew in a greenhouse**

**(1) In-vivo determination method**

Cucumber (Variety: Tianjin Mici) was sown in big pots (with a diameter of 30 cm) in a greenhouse, remaining 3 plants for each pot after emergence. The first root-irrigation was started at the early onset of cucumber powdery mildew (first appearance of spots on the true leaves). 14% of 3-(3',4'-methylenedioxy phenyl)-piperidine acrylate EC was diluted at three concentrations of 1.00, 0.667 and 0.50 mg/mL (active ingredients), 500 mL liquor for each pot. The root-irrigations were conducted every 7 days consecutively for 3 times. 10 days after the third root-irrigation, the number of sick leaves at each grade of cucumber powdery mildew was investigated for the whole plant following the grading standard of 9 grades, to calculate the disease index and the control effect.

**(2) Determination results**

It is indicated from the determination results (Table 10) that, the root-irrigations with 3-(3',4'-methylenedioxy phenyl)-piperidine acrylate at the concentrations of 1.00, 0.667 and 0.50 mg/mL at the early onset have no effects on cucumber powdery mildew, indicating that the compound cannot be absorbed by cucumber roots and delivered upwards, that is, the compound has no systemic activity.

Table 10

| Name of Agents | Concentration of Agents (mg/mL) | Disease Index 10 Days after the Third Application | Control Effect (%) |
|---|---|---|---|
| 14% of 3-(3',4'-methylenedioxy phenyl)-piperidine acrylate EC | 1.00 | 46.50 | - |
| | 0.667 | 43.90 | - |
| | 0.50 | 45.26 | - |
| CK (clear water) | - | 45.70 | - |

**3.8 In-vivo determination of 3-(3',4'-methylenedioxy phenyl)-piperidine acrylate on the control of rape powdery mildew in a greenhouse**

**(1) In-vivo determination method**

Spring rape (Variety: Longyou No. 5) was sown in pots in a greenhouse, and inoculated by spraying a fresh spore suspension of rape powdery mildew (*E. cruciferarum*) at the early bolting period of rape. 7 days after the inoculation, the first application was started before onset. Both sides of the leaves were sprayed evenly with a small hand-held sprayer so that the leaves were wetted by the liquor without loss. 14% of 3-(3',4'-methylenedioxy phenyl)-piperidine acrylate EC was diluted at five concentrations of 1.00, 0.80, 0.667, 0.571 and 0.50 mg/mL (active ingredients); the control agent, 12.5% of myclobutanil EC, was diluted at two concentrations of 0.167 and 0.143 mg/mL (active ingredients); additionally clear water was used as the control. Applications were conducted every 10 days consecutively for 4 times. 10 days after the fourth application, the number of sick leaves at each grade of powdery mildew was investigated for the whole plant following the grading standard of 9 grades, to calculate the disease index and the control effect.

**(2) Determination results**

It is indicated from the determination results (Table 11) that, 3-(3',4'-methylenedioxy phenyl)-piperidine acrylate has a good control effect on rape powdery mildew. The control effect of application at the concentration of 1.00-0.50 mg/mL before the onset of powdery mildew can be up to 93.78%~100%. However, it is inferior to the control effect of the control agent, 12.5% of myclobutanil EC, of which the control effect at the concentration of 0.143 mg/mL can reach 100%.

Table 11

| Name of Agents | Concentration of Agents (mg/mL) | Disease Index 10 Days after the Fourth Application | Control Effect (%) |
|---|---|---|---|
| 14% of 3-(3',4'-methylenedioxy phenyl)-piperidine acrylate EC | 1.00 | 0.00 | 100.00 |
| | 0.80 | 0.63 | 98.49 |
| | 0.667 | 1.66 | 96.03 |
| | 0.571 | 2.08 | 95.02 |
| | 0.50 | 2.60 | 93.78 |
| 12.5% of myclobutanil EC | 0.167 | 0.00 | 100.00 |
| | 0.143 | 0.00 | 100.00 |
| CK (clear water) | - | 41.80 | - |

**3.9 In-vivo determination of 3-(3',4'-methylenedioxy phenyl)-piperidine acrylate on the control of pepper powdery mildew in a greenhouse**

**(1) In-vivo determination method**

Pepper seedling (Variety: Bell pepper) was carried out in a greenhouse, and the seedlings were transplanted into pots, 3 for each pot. Sick leaves of powdery mildew (*Leveillula taurica*) were harvested form peppers (Longjiao No. 2) in a solar greenhouse in Jingyuan County, Baiyin City, and formulated into a spore suspension of powdery mildew. Both sides of the pepper leaves were sprayed evenly with a small hand-held sprayer and inoculated. The first application was started at the early onset of powdery mildew. 14% of 3-(3',4'-methylenedioxy phenyl)-piperidine acrylate EC was diluted at four concentrations of 1.00, 0.667, 0.50 and 0.40 mg/mL (active ingredients); the control agent, 12.5% of myclobutanil EC, was diluted at a concentration of 0.063 mg/mL (active ingredients); additionally clear water was used as the control. The instrument for application is a small hand-held sprayer. Both sides of the leaves were sprayed evenly so that the leaves were wetted by the liquor without loss. Applications were conducted every 7 days consecutively for 3 times. 10 days after the third application, the disease extent of powdery mildew in the upper, middle and lower 3 leaves of each plant was investigated, to calculate the disease index and the control effect.

**(2) Determination results**

It is indicated from the determination results (Table 12) that, 3-(3',4'-methylenedioxy phenyl)-piperidine acrylate has high control effects on pepper powdery mildew. The control effects of application at the concentrations of 1.00, 0.667 and 0.50 mg/mL at the early onset of powdery mildew are 100%, 84.56% and 75.56%, respectively. However, they are inferior to the control effect of the control agent, 12.5% of myclobutanil EC, of which the control effect at the concentration of 0.063 mg/mL can reach 100%.

Table 12

| Name of Agents | Concentration of Agents (mg/mL) | Disease Index 10 Days after the Third Application | Control Effect (%) |
|---|---|---|---|
| 14% of 3-(3',4'-methylenedioxy phenyl)-piperidine acrylate EC | 1.00 | 0.00 | 100.00 |
| | 0.667 | 6.67 | 84.56 |
| | 0.50 | 10.56 | 75.56 |
| | 0.40 | 23.89 | 44.71 |
| 12.5% of myclobutanil EC | 0.063 | 0.00 | 100.00 |
| CK (clear water) | - | 43.21 | - |

It is collectively evaluated according to the in-vivo determination results in a greenhouse that:

(I) The application of 3-(3',4'-methylenedioxy phenyl)-N-n-propyl acrylamide at the early onset has a good control effect on zucchini powdery mildew. The control effect at the concentration of 0.50 mg/mL can be up to 91.09%, which is superior to that of 3-(3',4'-methylenedioxy phenyl)-piperidine acrylate (67.06%).

(II) 3-(3',4'-methylenedioxy phenyl)-N-n-propyl acrylamide and 3-(3',4'-methylenedioxy phenyl)-piperidine acrylate both have good control effects on marrow bean powdery mildew. The control effects at the concentration of 0.20 and 0.143 mg/mL are 93.53%, 92.58% and 91.55%, 89.40%, respectively.

(III) The application of 3-(3',4'-methylenedioxy phenyl)-N-n-propyl acrylamide at the early onset has a good control effect on wheat powdery mildew. The control effect at the concentration of 0.20 mg/mL can be up to 86.97%, which is superior to that of 3-(3',4'-methylenedioxy phenyl)-piperidine acrylate (59.11%). It has both protective and therapeutical effects on the control of wheat powdery mildew, and the protective and therapeutical effects are comparable.

(IV) 3-(3',4'-methylenedioxy phenyl)-piperidine acrylate has high control effects on damping-off of tomatoes, eggplants and peppers. The control effects at the concentration of 0.80 mg/mL are 61.41%, 63.47%% and 67.71%, respectively, which are superior to those of a non-systemic broad-spectrum fungicide, chlorothalonil, and a systemic broad-spectrum fungicide, carbendazim; the control effects of 3-(3',4'-methylenedioxy phenyl)-N-n-propyl acrylamide on damping-off of tomatoes and eggplants are poor, which are comparable to those of chlorothalonil and carbendazim; and its control effect on damping-off of peppers is comparable to that of chlorothalonil, while superior to that of carbendazim.

(V) 3-(3',4'-methylenedioxy phenyl)-N-n-propyl acrylamide and 3-(3',4'-methylenedioxy phenyl)-piperidine acrylate have both protective and therapeutical effects on the control of cucumber powdery mildew, and the protective effects are superior to the therapeutical effects. 3-(3',4'-methylenedioxy phenyl)-piperidine acrylate has no systemic activity on the control of cucumber powdery mildew.

(VI) 3-(3',4'-methylenedioxy phenyl)-piperidine acrylate has a good control effect on rape powdery mildew, and the control effect for the application at the concentration of 1.00-0.50 mg/mL before the onset of powdery mildew reaches 93.78%~100%.

(VII) 3-(3',4'-methylenedioxy phenyl)-piperidine acrylate has a high control effect on pepper powdery mildew, and the control effects for the application at the concentrations of 1.00 and 0.667mg/mL at the early onset of powdery mildew are 100%, 84.56%, respectively.

**Embodiment 4 The field efficiency tests of 3-(3',4'-methylenedioxy phenyl)-N-n-propyl acrylamide and 3-(3',4'-methylenedioxy phenyl)-piperidine acrylate**

The formulation of emulsifiable concentrate is the same as that in Embodiment 3.

**4.1 The field efficiency tests of 3-(3',4'-methylenedioxy phenyl)-N-n-propyl acrylamide and 3-(3',4'-methylenedioxy phenyl)-piperidine acrylate for the control of zucchini powdery mildew**

**(1) The field efficiency test method**

The variety of zucchini was Zaoqing F1 (manufactured by Wuwei Dadi Seed Industry Co., Ltd.), which was sown on July $29^{th}$, 2016. The first application was started on August $26^{th}$, at the early onset of powdery mildew (the average disease index is 10.07). The instrument for application was Agrolex HD 400 Model hand operating knapsack sprayer, which employed a cone nozzle. Each agent was formulated into the desired concentrations according to the usage amount of the control clear water. Both sides of the leaves were sprayed evenly so that the leaves were wetted by the liquor without loss. 10% of 3-(3',4'-methylenedioxy phenyl)-N-n-propyl acrylamide EC and 14% of 3-(3',4'-methylenedioxy phenyl)-piperidine acrylate EC were both diluted at a concentration of 0.50 mg/mL (active ingredients); the control agent, 430 g/L of tebuconazole SC (manufactured by Yantai Keda Chemical Co., Ltd.) was also diluted at a concentration of 0.50 mg/mL (active ingredients); additionally clear water was used as the control. Thereafter, applications were conducted every 7 days consecutively for 4 times. 10 days after the last application, the number of sick leaves at each grade of powdery mildew was investigated for the whole plant following the grading standard of 9 grades, to calculate the disease index and the control effect.

**(2) Test results**

The field efficiency test (Table 13) shows that, the application of 3-(3',4'-methylenedioxy phenyl)-N-n-propyl acrylamide at the early onset has a high control effect on zucchini powdery mildew. The control effect at the concentration of 0.50 mg/mL is 60.24%, which is significantly superior to that of the control agent, 430 g/L of tebuconazole SC (37.74%); 3-(3',4'-methylenedioxy phenyl)-piperidine acrylate has a poor control effect on zucchini powdery mildew (30.04%), which is inferior to that of 430 g/L of tebuconazole SC.

Table 13

| Name of Agents | Concentration of Agents (mg/mL) | Average Disease Index before Application | Disease Index 10 days after the Fourth Application | Control Effect (%) |
|---|---|---|---|---|
| 10% of 3-(3',4'-methylenedioxy phenyl)-N-n-propyl acrylamide EC | 0.50 | 10.07 | 34.17 | 60.24 |
| 14% of 3-(3',4'-methylenedioxy phenyl)-piperidine acrylate EC | 0.50 | 10.07 | 60.12 | 30.04 |
| 430 g/L of tebuconazole SC | 0.50 | 10.07 | 53.50 | 37.74 |
| clear water control | - | 10.07 | 85.94 | - |

**4.2 The field efficiency tests of 3-(3',4'-methylenedioxy phenyl)-N-n-propyl acrylamide and 3-(3',4'-methylenedioxy phenyl)-piperidine acrylate for the control of flax powdery mildew**

**(1) The field efficiency test method**

The variety of flax is Zhangya No. 2. 10% of 3-(3',4'-methylenedioxy phenyl)-N-n-propyl acrylamide EC and 14% of 3-(3',4'-methylenedioxy phenyl)-piperidine acrylate EC were both diluted at a concentration of 0.50 mg/mL (active ingredients); the control agent, 430 g/L of tebuconazole SC, was also diluted at a concentration of 0.50 mg/mL (active ingredients); additionally clear water was used as the control. The first application was started at the first appearance of spots for flax powdery mildew (*Oidium lini*) (natural incidence), and the second application was carried out 10 days later. The instrument for application was a WS-18D knapsack electric sprayer, which employed a cone nozzle. Each agent was formulated into the desired concentrations according to the usage amount of the control clear water. Both sides of the leaves were sprayed evenly. 10 days after the second application, the number of sick leaves at each grade of powdery mildew was investigated for the whole plant following the grading standard of 9 grades, to calculate the disease index and the control effect.

Table 14

| Name of Agents | Concentration of Agents (mg/mL) | Disease Index 10 days after the Second Application | Control Effect (%) |
|---|---|---|---|
| 10% of 3-(3',4'-methylenedioxy phenyl)-N-n-propyl acrylamide EC | 0.50 | 15.00 | 83.70 |
| 14% of 3-(3',4'-methylenedioxy phenyl)-piperidine acrylate EC | 0.50 | 53.53 | 41.82 |
| 430 g/L of tebuconazole SC | 0.50 | 1.47 | 98.40 |
| CK (clear water) | - | 92.00 | - |

**(2) Test results**

The test results (Table 14) show that, the application of 3-(3',4'-methylenedioxy phenyl)-N-n-propyl acrylamide at the early onset has a good control effect on flax powdery mildew. The control effect at the concentration of 0.50 mg/mL can be up to 83.70%, but inferior to that of the control agent, 430 g/L of tebuconazole SC (98.40%). 3-(3',4'-methylenedioxy phenyl)-piperidine acrylate has a poor control effect on flax powdery mildew (41.82%).

**4.3 The field efficiency test of 3-(3',4'-methylenedioxy phenyl)-piperidine acrylate for the control of tomato powdery mildew**

**(1)The field efficiency test method**

Tomatoes (Variety: Song Tian Fen Yang Yang) were planted in a solar greenhouse. 14% of 3-(3',4'-methylenedioxy phenyl)-piperidine acrylate EC was diluted at four concentrations of 1.00, 0.80, 0.667 and 0.50 mg/mL (active ingredients); the control agent, 72% cream urea·manganese zinc WP was diluted at a concentration of 1.00 mg/mL (active ingredients); additionally clear water was used as the control. The first application was started before the onset of *L.taurica*. The instrument for application was a WS-18D knapsack electric sprayer, which employed a cone nozzle. Each agent was formulated into the desired concentrations according to the usage amount of the control clear water. Both sides of the tomato leaves were sprayed evenly. Thereafter, applications were conducted every 7 days consecutively for 4 times. 10 days after the fourth application, the number of sick leaves at each grade of powdery mildew was investigated following the grading standard of 9 grades, to calculate the disease index and the control effect.

Table 15

| Name of Agents | Concentration of Agents (mg/mL) | Disease Index 10 days after the Fourth Application | Control Effect (%) |
|---|---|---|---|
| 14% of 3-(3',4'-methylenedioxy phenyl)-piperidine acrylate EC | 1.00 | 0.92 | 97.85 |
| | 0.80 | 4.13 | 90.36 |
| | 0.667 | 5.06 | 88.19 |
| | 0.50 | 7.85 | 81.68 |
| 72% cream urea·manganese zinc WP | 1.00 | 14.73 | 65.62 |
| CK (clear water) | - | 42.85 | - |

**(2) Test results**

The test results (Table 15) show that, the application of 3-(3',4'-methylenedioxy phenyl)-piperidine acrylate before onset has a good control effect on tomato powdery mildew. The control effects at the concentration of 1.00, 0.80, 0.667 and 0.50 mg/mL are 97.85%, 90.36%, 88.19% and 81.68%, respectively, which are all significantly superior to those of the control agent, 72% cream urea·manganese zinc WP (65.62%).

**4.4 The field efficiency tests of 3-(3',4'-methylenedioxy phenyl)-N-n-propyl acrylamide and 3-(3',4'-methylenedioxy phenyl)-piperidine acrylate for the control of cucumber powdery mildew**

**(1) The field efficiency test method**

10% of 3-(3',4'-methylenedioxy phenyl)-N-n-propyl acrylamide EC and 14% of 3-(3',4'-methylenedioxy phenyl)-piperidine acrylate EC were diluted at a concentration of 0.50 mg/mL (2000 fold liquid of active ingredients); the control agent, 10% of dimethomorph EW, was also diluted at a concentration of 0.50 mg/mL (2000 fold liquid of active ingredients); the control agent, 80% of mancozeb WP, was diluted at a concentration into a 500 fold liquid according to the usage amount of the formulation; the control agents, 12.5% of myclobutanil EC, 25% of propiconazole EC, 430 g/L of tebuconazole SC, 10% of hexaconazole EC and 37% of difenoconazole EC were all diluted at a concentration into 1500 fold liquids according to the usage amount of the formulation; additionally clear water was used as the control. The first application was started on June 15$^{th}$, and *E. cichoracearum* was inoculated on June 17$^{th}$ (the sick leaves were harvested from the solar greenhouse near the military airfield at Xiaguanying town, Yuzhong County, moisturized in the greenhouse for 2 days, then shreded, and filtered over a gauze, the filtrate was sprayed onto both sides of the cucumber leaves with the cone nozzle of an electric sprayer for inoculation). The second, third and fourth applications were conducted on June 23rd, July 2nd, and July 9th respectively, the water consumptions of which were adjusted promptly according to the amount of water desired for spraying evenly onto both sides of the control leaves. 10 days after the fourth application, the number of sick leaves at each grade of powdery mildew was investigated following the grading standard of 9 grades, to calculate the disease index and the control effect.

(2) Test results

Table 16

| Name of Agents | Concentration of Agents or Dilution Factor (mg/mL, Fold Liquid) | Disease Index 10 days after the Fourth Application | Control Effect (%) |
|---|---|---|---|
| 10% of 3-(3',4'-methylenedioxy phenyl)-N-n-propyl acrylamide EC | 0.50 | 11.62 | 88.38 |
| 14% of 3-(3',4'-methylenedioxy phenyl)-piperidine acrylate EC | 0.50 | 30.16 | 69.84 |
| 10% of dimethomorph EW | 0.50 | 71.10 | 28.90 |
| 80% of mancozeb WP | 500 | 0 | 100 |
| 12.5% of myclobutanil EC | 1500 | 16.30 | 83.70 |
| 25% of propiconazole EC | 1500 | 6.06 | 93.93 |
| 430 g/L of tebuconazole SC | 1500 | 14.29 | 85.71 |
| 10% of hexaconazole EC | 1500 | 5.56 | 94.44 |
| 37% of difenoconazole EC | 1500 | 11.11 | 88.89 |
| CK (clear water) | - | 100 | - |

The test results (Table 16) show that, the application of 3-(3',4'-methylenedioxy phenyl)-N-n-propyl acrylamide before the onset has a good control effect on cucumber powdery mildew. The control effect at the concentration of 0.50 mg/mL can be up to 88.38%, which is comparable to the control effects of the control agents, 12.5% of myclobutanil EC, 430 g/L of tebuconazole SC and 37% of difenoconazole EC 1500 fold liquid (the amount of the formulation) (83.70%, 85.71% and 88.89%), slightly lower than the control effects of the control agents, 25% of propiconazole EC and 10% of hexaconazole EC 1500 fold liquid (93.93% and 94.44%), but inferior to the control effect of the control agent, 80% of mancozeb WP 500 fold liquid (100%), and significantly superior to the control effect of the control agent, 10% of dimethomorph EW (28.90%). 3-(3',4'-methylenedioxy phenyl)-piperidine acrylate has a high control effect on cucumber powdery mildew. The control effect at the concentration of 0.50 mg/mL is only 69.84%, which is inferior to the control effect of the following 6 control agents: mancozeb, myclobutanil, propiconazole, tebuconazole, hexaconazole and difenoconazole, but significantly superior to that of the control agent, 10% of dimethomorph EW.

The test results further show that, 12.5% of myclobutanil EC, 25% of propiconazole EC, 430 g/L of tebuconazole SC and 10% of hexaconazole EC have phytotoxicities to cucumber at the concentration of 1500 fold liquid, displaying that the leaves become dark green, the leaves become thicker and harder, internodes become shorter, and the inhibition on the growth. 3-(3',4'-methylenedioxy phenyl)-N-n-propyl acrylamide EC, 14% of 3-(3',4'-methylenedioxy phenyl)-piperidine acrylate EC and 37% of difenoconazole EC are safe for cucumber at the test doses.

It is collectively evaluated according to the field efficiency test results that:

(I) The application of 3-(3',4'-methylenedioxy phenyl)-N-n-propyl acrylamide at the early onset has a high control effect on zucchini powdery mildew. The control effect at the concentration of 0.50 mg/mL is 60.24%, which is superior to that of triazole fungicide, tebuconazole. 3-(3',4'-methylenedioxy phenyl)-piperidine acrylate has a poor control effect on zucchini powdery mildew, which is inferior to that of tebuconazole.

(II) The application of 3-(3',4'-methylenedioxy phenyl)-N-n-propyl acrylamide at the early onset has a good control effect on flax powdery mildew. The control effect at the concentration of 0.50 mg/mL can be up to 83.70%, which is inferior to that of tebuconazole. 3-(3',4'-methylenedioxy phenyl)-piperidine acrylate has a poor control effect on flax powdery mildew.

(III) The application of 3-(3',4'-methylenedioxy phenyl)-piperidine acrylate before the onset has a good control effect on tomato powdery mildew. The control effect at the concentration of 0.667~1.00 mg/mL is between 88.19% and 97.85%, which is superior to that of the protective fungicide, cream urea·manganese zinc.

(IV) The application of 3-(3',4'-methylenedioxy phenyl)-N-n-propyl acrylamide before the onset has a good control

effect on cucumber powdery mildew. The control effect at the concentration of 0.50 mg/mL can be up to 88.38%, which is comparable to those of triazole fungicide, myclobutanil, tebuconazole and difenoconazole, and superior to that of acrylamide fungicide, dimethomorph. 3-(3',4'-methylenedioxy phenyl)-piperidine acrylate has a high control effect on cucumber powdery mildew. The control effect at the concentration of 0.50 mg/mL is 69.84%, which is superior to that of dimethomorph.

(V) 3-(3',4'-methylenedioxy phenyl)-N-n-propyl acrylamide and 3-(3',4'-methylenedioxy phenyl)-piperidine acrylate are safe for zucchini, cucumber, flax, and tomato at the test doses.

Unless otherwise specified, compounds or fungicides used in the present invention are all known materials or commercial products.

## Claims

1. A use of cinnamamide derivatives in the control of fungal diseases of crops, the cinnamamide derivative is 3-(3',4'-methylenedioxy phenyl)-N-n-propyl acrylamide, the chemical structural formula of which is as below:

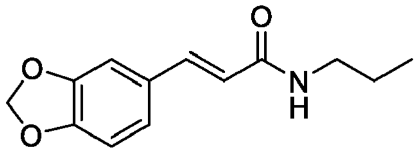

;

alternatively, the cinnamamide derivative is 3-(3',4'-methylenedioxy phenyl)-piperidine acrylate, the chemical structural formula of which is as below:

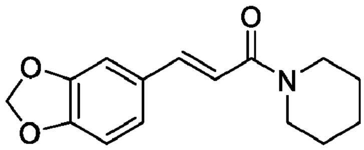

.

2. The use of claim 1, wherein the fungal disease is at least one of powdery mildew, damping-off, blight, early blight, rot, downy blight, fusarium wilt, gummy stem blight, pythium rot, anthracnose, dry rot, white rot, full rot, ring spot, sheath blight, gray mold, northern leaf blight, F. verticillioide, stalk break, rice blast, and late blight.

3. The use of claim 1, wherein the crop is at least one of apple, watermelon, pepper, grape, cotton, corn, wheat, rice, potato, rape, marrow bean, flax, tomato, eggplant, cucumber, zucchini, melon, cucurbit, opo squash, and white gourd.

4. The use of claim 1, wherein the 3-(3',4'-methylenedioxy phenyl)-N-n-propyl acrylamide is used as an antifungal active ingredient in the preparation of a fungicide for the control of powdery mildew of crops.

5. The use of claim 1, wherein the 3-(3',4'-methylenedioxy phenyl)-piperidine acrylate is used as an antifungal active ingredient in the preparation of a fungicide for the control of powdery mildew of crops.

6. The use of claim 1, wherein the 3-(3',4'-methylenedioxy phenyl)-piperidine acrylate is used as an antifungal active ingredient in the preparation of a fungicide for the control of damping-off of tomatoes, eggplants and/or peppers.

Europäisches Patentamt
European Patent Office
Office européen des brevets

# EUROPEAN SEARCH REPORT

Application Number
EP 20 17 7922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 103 910 709 A (INST OF PLANT PROT GANSU ACADEMY OF AGRICULTURAL SCIENCES) 9 July 2014 (2014-07-09) * the whole document * ----- | 1-3,5,6 | INV. A01N43/30 A01P3/00 |
| X | GANGADHARA SEELOLLA: "Synthesis, Antimicrobial and Antioxidant Activities of Novel series of Cinnamamide Derivatives having Morpholine Moiety", MEDICINAL CHEMISTRY, 1 January 2014 (2014-01-01), XP055708808, DOI: 10.4172/2161-0444.1000229 * table 1 * ----- | 1 | |
| Y | VASQUES DA SILVA R ET AL: "Antifungal amides from Piper arboreum and Piper tuberculatum", PHYTOCHEMISTRY, ELSEVIER, AMSTERDAM, NL, vol. 59, no. 5, 1 March 2002 (2002-03-01), pages 521-527, XP004340220, ISSN: 0031-9422, DOI: 10.1016/S0031-9422(01)00431-9 * the whole document * ----- | 1-3 | TECHNICAL FIELDS SEARCHED (IPC) A01N |
| Y | WO 2019/122107 A1 (UNIV GENT [BE]; VIB VZW [BE]; TAMINCO BVBA [BE]) 27 June 2019 (2019-06-27) * claims 1-4; table 1 * ----- | 1-3 | |
| | -/-- | | |

The present search report has been drawn up for all claims

1

| Place of search | Date of completion of the search | Examiner |
|---|---|---|
| Munich | 26 June 2020 | Lorusso, Patrizia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 20 17 7922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TOMAS MELISSA BARRERA ET AL: "Synthesis of Analogs of Trans-Fagaramide and Their Cytotoxic Activity", PHARMACEUTICAL CHEMISTRY JOURNAL, SPRINGER NEW YORK LLC, US, vol. 51, no. 11, 17 February 2018 (2018-02-17), pages 995-1004, XP036438490, ISSN: 0091-150X, DOI: 10.1007/S11094-018-1729-1 [retrieved on 2018-02-17] * figure 2; compound 7 * ----- | 1-6 | |
| | | | TECHNICAL FIELDS SEARCHED (IPC) |

1

The present search report has been drawn up for all claims

| Place of search | Date of completion of the search | Examiner |
|---|---|---|
| Munich | 26 June 2020 | Lorusso, Patrizia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 20 17 7922

This annex lists the patent family members relating to the patent documents cited in the above-mentioned European search report. The members are as contained in the European Patent Office EDP file on
The European Patent Office is in no way liable for these particulars which are merely given for the purpose of information.

26-06-2020

| Patent document cited in search report | Publication date | Patent family member(s) | Publication date |
|---|---|---|---|
| CN 103910709 A | 09-07-2014 | NONE | |
| WO 2019122107 A1 | 27-06-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ALBERT A. et al.** *Brighton: British Crop Prot. Council,* 1988, 17-23
- **LIU CHANGLING et al.** *Brighton: British Crop Prot. Council,* 2000, 549-556
- **RIBEIRO T. S. et al.** *Bioorg. Med. Chem. Lett.,* 2004, vol. 14 (13), 3555-3558
- **FRANKLIM T.M. et al.** *Molecules,* 2013, vol. 18 (6), 6366-6382
- **CARRARA V. D. S. et al.** *Eur. J. Med. Chem.,* 2010, vol. 45 (8), 3439-3445
- **MA FUNING et al.** *Journal of Huazhong Agricultural University,* 2009, vol. 30 (1), 23-26
- **XU CHANGLIANG et al.** *Chinese Medicinal Biotechnology,* 2013, vol. 8 (1), 46-52
- **CHEN SIYU.** Changsha: School of Pharmacy. Central South University, 2011
- **PENG CHUNYONG et al.** *Organic Chemistry,* 2013, vol. 33 (2), 383-388
- **LIU YANXIA et al.** *Plant Protection,* 2009, vol. 35 (5), 53-56
- **LIU YANXIA.** Guangzhou: College of National Resources and Environment. South China Agricultural University, 2009
- **LI YIFANG et al.** *Journal of Zhongkai University of Agriculture and Technology,* 2013, vol. 26 (2), 16-21
- **STOYKOVA B. et al.** *J. Mol. Struct.,* 2017, vol. 1135, 144-152